Europäisches Patentamt

(19) **European Patent Office**

**Office européen des brevets**

(11) Numéro de publication : **0 051 515 B1**

# FASCICULE DE BREVET EUROPÉEN

(12)

(45) Date de publication du fascicule du brevet :
13.06.84

(51) Int. Cl.³ : **B 62 D 5/00, B 62 D 5/04**

(21) Numéro de dépôt : **81401619.2**

(22) Date de dépôt : **15.10.81**

(54) **Perfectionnements apportés aux mécanismes d'assistance rotative, notamment pour direction de véhicule.**

(30) Priorité : **27.10.80 FR 8022967**

(43) Date de publication de la demande :
**12.05.82 Bulletin 82/19**

(45) Mention de la délivrance du brevet :
**13.06.84 Bulletin 84/24**

(84) Etats contractants désignés :
**DE GB IT SE**

(56) Documents cités :
**FR-A- 1 096 781
FR-A- 2 417 676
FR-E-      92 889
US-A- 2 833 154**

(73) Titulaire : **SOCIETE ANONYME AUTOMOBILES CITROEN
117 à 167, Quai André Citroen
F-75747 Paris Cedex 15 (FR)**

**AUTOMOBILES PEUGEOT
75, avenue de la Grande Armée
F-75116 Paris (FR)**

(72) Inventeur : **Barthélémy, André
52, Route de Limours
F-78470 Saint-Rémy-lès-Chevreuse (FR)**

(74) Mandataire : **Michardière, Bernard et al
Cabinet Plasseraud 84, rue d'Amsterdam
F-75009 Paris (FR)**

## Description

L'invention est relative à un mécanisme d'assistance rotative propre à être accouplé à un organe récepteur susceptible de tourner alternativement dans les deux sens, en réponse à la rotation d'un arbre de manœuvre, mécanisme du genre de ceux qui comprennent un moteur, des moyens de réduction de la vitesse du moteur et au moins un embrayage actionné par des moyens de commande comportant une pièce, coaxiale à l'organe récepteur, coulissant à l'encontre de moyens de rappel élastiques en fonction de l'amplitude et du sens du couple de manœuvre.

L'invention concerne plus particulièrement, parce que c'est dans ce cas que son application semble devoir présenter le plus d'intérêt, mais non exclusivement, de tels mécanismes d'assistance rotative pour direction de véhicule automobile (un mécanisme de ce type est décrit dans le brevet FR-A-1096781).

L'invention a pour but, surtout, de rendre les mécanismes d'assistance rotative du genre en question tels qu'ils répondent mieux que jusqu'à présent aux diverses exigences de la pratique et que, notamment, leurs conditions de travail soient moins sévères.

Selon l'invention, un mécanisme d'assistance rotative propre à être accouplé à un organe récepteur susceptible de tourner alternativement dans les deux sens, en réponse à la rotation d'un arbre de manœuvre, notamment pour direction de véhicule, du genre défini précédemment, est caractérisé par le fait que le ou chaque embrayage est monté sur un arbre des moyens de réduction qui tourne plus vite que l'organe récepteur, et que les moyens de commande comprennent des moyens de liaison entre la susdite pièce coulissante et le ou lesdits embrayages.

Avantageusement, les moyens de liaison sont formés par une plaque mobile coopérant avec la pièce coulissante.

Ladite plaque mobile peut être rigidement solidaire de la pièce coulissante, cette pièce étant montée libre en rotation sur l'organe récepteur ou sur l'arbre de manœuvre coaxial à cet organe récepteur.

Selon une variante, la plaque mobile peut constituer un levier dont une partie intermédiaire coopère avec la partie coulissante et dont les parties extrêmes sont reliées, respectivement, à un carter contenant les moyens de réduction de la vitesse du moteur, et à un élément mobile du ou de chaque embrayage.

Avantageusement, le ou chaque embrayage est disposé directement sur l'arbre de sortie du moteur.

Lorsque le moteur est prévu pour tourner dans un seul sens, les moyens de réduction de la vitesse comprennent un train d'engrenages réducteur et des moyens inverseurs du sens de rotation ; un premier embrayage relie le moteur directement au train d'engrenages réducteur, tandis qu'un second embrayage relie le moteur au train d'engrenages réducteur par l'intermédiaire des moyens inverseurs, les deux embrayages étant coaxiaux à l'arbre de sortie et engagés alternativement par mise en action des moyens de commande.

L'invention consiste, mises à part les dispositions exposées ci-desus, en certaines autres dispositions dont il sera plus explicitement question ci-après à propos de modes de réalisation particuliers qui vont être décrits en détail avec référence aux dessins ci-annexés, mais qui ne sont nullement limitatifs.

La figure 1 de ces dessins représente schématiquement un mécanisme d'assistance rotative pour direction de véhicule, conforme à l'invention.

La figure 2 est une coupe longitudinale, avec parties en extérieur, d'une variante de réalisation du mécanisme d'assistance.

La figure 3, enfin, est une vue suivant III figure 2, certains éléments du mécanisme d'assistance ayant été supprimés sur cette figure 3 pour en faciliter la lecture.

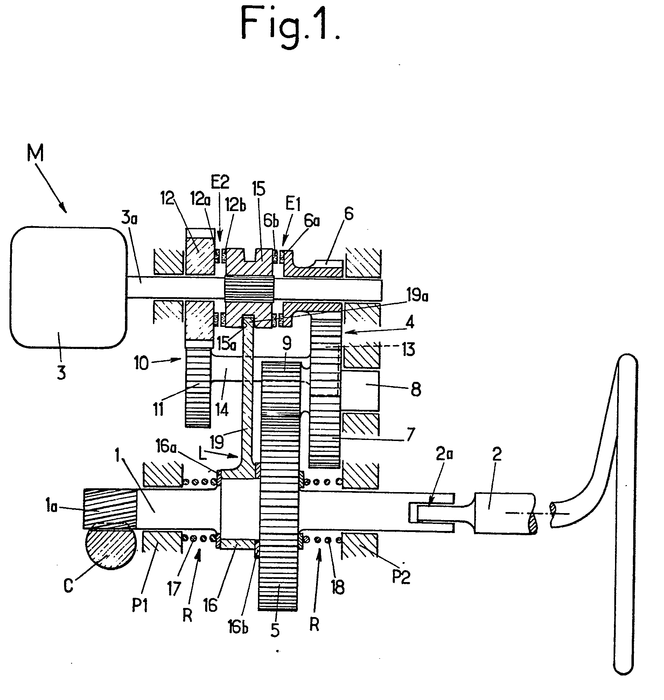

En se reportant à la figure 1 des dessins, on peut voir un mécanisme M d'assistance rotative propre à être accouplé à un organe récepteur rotatif 1, tel qu'un pignon de direction à crémaillère C pour véhicule automobile. L'organe récepteur 1 est susceptible de tourner alternativement dans les deux sens en réponse à la rotation d'un arbre de manœuvre 2 coaxial. La liaison en rotation entre l'organe récepteur 1 et l'arbre 2 est assurée par tout moyen d'accouplement 2a classique permettant un coulissement axial.

L'organe récepteur 1 est monté coulissant dans des paliers P1, P2 et comporte une denture 1a, inclinée par rapport à la direction de son axe, de telle sorte que, lors de la transmission d'un couple, la réaction de la denture 1a contre les dents coopérantes de la crémaillère C ait une composante axiale provoquant le coulissement de l'organe 1, à l'encontre de moyens de rappel élastiques R. Le mécanisme M comprend un moteur 3, de préférence électrique, propre à tourner dans un seul sens, et des moyens 4 de réduction de la vitesse du moteur, de manière à permettre l'entraînement de l'organe rotatif 1 à une vitesse réduite. Les moyens de réduction 4 de la vitesse comprennent un train d'engrenages dont la roue 5 qui tourne le plus lentement est solidaire de l'organe rotatif 1 ; le pignon le plus rapide 6 est monté fou directement sur l'arbre de sortie 3a du moteur 3. Ce pignon 6 engrène avec une roue dentée 7 portée par un arbre intermédiaire 8 du réducteur. Cette roue dentée 7 est solidaire d'un pignon 9 coaxial, de plus petit diamètre qu'elle, qui engrène avec la roue 5.

Le pignon 6 peut être lié en rotation à l'arbre 3a par l'intermédiaire d'un premier embrayage E1.

Des moyens inverseurs 10 du sens de rotation sont en outre prévus et comportent un renvoi d'engrenages dont une roue dentée 11 engrène avec une roue dentée 12 de même diamètre, montée folle sur l'arbre 3a ; la roue dentée 11 est solidaire d'un pignon 13 de même diamètre que le pignon 6, et qui engrène avec la même roue dentée 7.

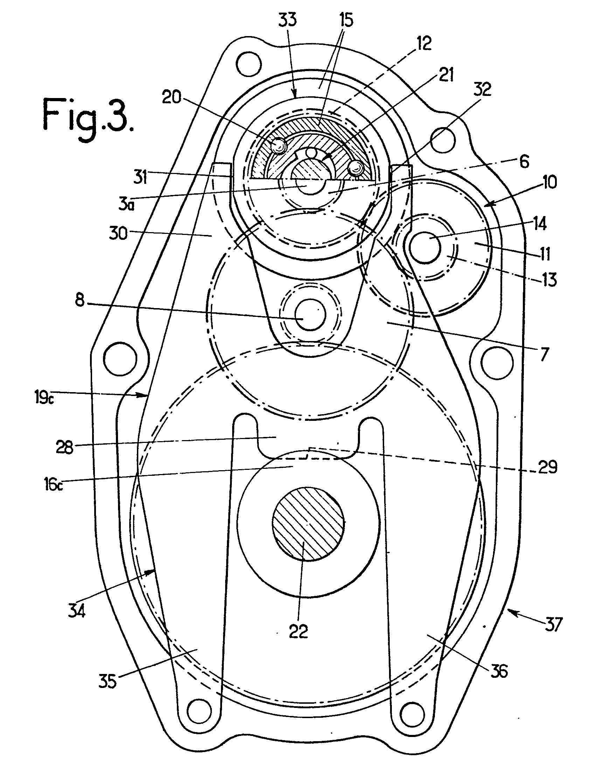

La roue dentée 11 et le pignon 13 sont portés par un arbre 14 de renvoi, parallèle aux arbres 3a et 8. L'arbre 14 est décalé transversalement, comme visible sur la figure 3, pour assurer les engrènements indiqués.

La roue dentée 12 du renvoi d'engrenages peut être liée en rotation à l'arbre 3a par un second embrayage E2.

On comprend immédiatement que l'organe récepteur 1 tourne dans un premier sens quand le mouvement de rotation est transmis, depuis l'arbre 3a, par l'embrayage E1, le pignon 6, la roue 7, le pignon 9 et la roue 5.

L'organe récepteur 1 tourne dans le sens opposé, avec la même vitesse absolue, lorsque le mouvement de rotation est transmis, depuis l'arbre 3a, par l'embrayage E2 et les moyens inverseurs 10 jusqu'à la roue 7.

Les embrayages E1, E2, comportent respectivement, un plateau 6a, solidaire du pignon 6, et un plateau 12a, solidaire de la roue 12, susceptibles d'être alternativement entraînés en rotation par des anneaux de friction 6b, 12b, solidaires en rotation d'un baladeur 15 monté libre en coulissement sur l'arbre 3a du moteur ; ce baladeur 15 est lié en rotation à l'arbre 3a par un jeu de cannelures et de nervures complémentaires, parallèles à l'axe de l'arbre 3a.

Les moyens de commande des embrayages E1, E2 comprennent une pièce coulissante 16, coaxiale à l'organe récepteur 1. La pièce 16 est montée libre en rotation sur l'organe 1 mais est liée en translation à cet organe. Le coulissement, suivant la direction axiale, de la pièce 16 et de l'organe 1 s'effectue à l'encontre de moyens de rappel élastiques formés par deux ressorts de rappel en hélice 17, 18.

La liberté en rotation de la pièce 16 et son maintien axial sur l'organe rotatif 1 et contre la roue 5 est obtenue à l'aide d'anneaux d'appui 16a, 16b de faible coefficient de frottement.

Les moyens de commande des embrayages E1, E2, comprennent, en outre, des moyens de liaison L entre la pièce coulissante 16 et les embrayages.

Ces moyens de liaison L sont formés par une plaque 19 mobile, coopérant avec la pièce coulissante 16. Dans la réalisation de la figure 1, la plaque 19 est solidaire de la pièce 16. Une liaison en translation de la plaque 19 et du baladeur 15 est assurée par engagement avec un jeu faible ou nul, de l'extrémité correspondante 19a de la plaque dans un embrèvement, tel qu'une gorge 15a, du baladeur 15.

La pièce 16 peut former partie intégrante de la plaque 19, ou être fixée à cette dernière, notamment par vissage ou sertissage. La plaque 19 transmet toute translation de la pièce 16 au baladeur 15.

Le ressort 17 est disposé entre le palier P1 et la pièce 16, avec interposition de l'anneau 16a.

L'autre ressort 18 est disposé entre le palier P2 et la roue 5.

Le fonctionnement du mécanisme d'assistance de la figure 1 est le suivant.

Quand aucun couple de manœuvre n'est appliqué sur l'arbre 2, la plaque 19 occupe une position de repos déterminée par l'équilibre des ressorts 17, 18. A cette position correspond la position débrayée des deux embrayages E1, E2.

De ce fait, toute rotation éventuelle du moteur 3 et donc de l'arbre 3a et du baladeur 15 n'est pas transmise au train de réduction 4 et à l'organe récepteur 1.

Quand un couple de manœuvre est appliqué sur l'arbre 2, la rotation de cet arbre entraîne celle de l'organe récepteur 1 qui, par suite de la réaction de denture entre les dents 1a et la crémaillère C, et de sa liberté axiale, va se déplacer dans un sens ou dans l'autre, selon le sens du couple appliqué, à l'encontre de l'un des ressorts 17, 18. L'amplitude du coulissement de l'organe récepteur 1 dépend de celle du couple appliqué.

La pièce 16 et la plaque 19 se déplacent en translation avec l'organe récepteur 1. Ce déplacement est transmis au baladeur 15.

Lorsque le couple exercé sur l'arbre 2 reste inférieur à un seuil déterminé, le déplacement du baladeur 15 est insuffisant pour engager l'un des embrayages E1, E2. Si le moteur 3 tourne (soit qu'il est excité en permanence ou soit qu'un dispositif de déclenchement, connu en lui-même, sensible au couple exercé sur l'arbre 2 ait provoqué la mise en marche du moteur 3 pour une valeur du couple inférieur au seuil déterminé), le réducteur 4 ne transmettra aucune assistance à la rotation de l'organe 1, du fait qu'il n'est pas accouplé au moteur 3.

Si ce moteur 3 ne tourne pas, notamment par suite d'un incident, la rotation du réducteur 4 et du renvoi 10, provoquée par celle de l'arbre 2 et de l'organe récepteur 1, n'est pas transmise à l'arbre 3a du moteur.

Lorsque le couple de manœuvre exercé sur l'arbre 2 est supérieur au seuil déterminé, le déplacement du baladeur 15 devient suffisant pour engager celui des embrayages E1, E2 qui permet l'entraînement du réducteur 4 dans le sens approprié pour que la roue 5 soit entraînée dans le même sens que le couple appliqué sur l'arbre 2.

Pour un premier sens de coulissement (vers la droite selon la représentation de la figure 1) de la pièce 16, de la plaque 19 et du baladeur 15, a lieu l'engagement de l'embrayage E1 et par suite de l'entraînement du pignon 6 et de la roue 7 dans un premier sens de rotation. Pour l'autre sens de coulissement de la plaque 19 et du baladeur 15 a lieu l'engagement de l'embrayage E2 et, par suite, l'entraînement de la roue 7 par les moyens inverseurs 10, c'est-à-dire par les roues 12 et 11 et par le pignon 13.

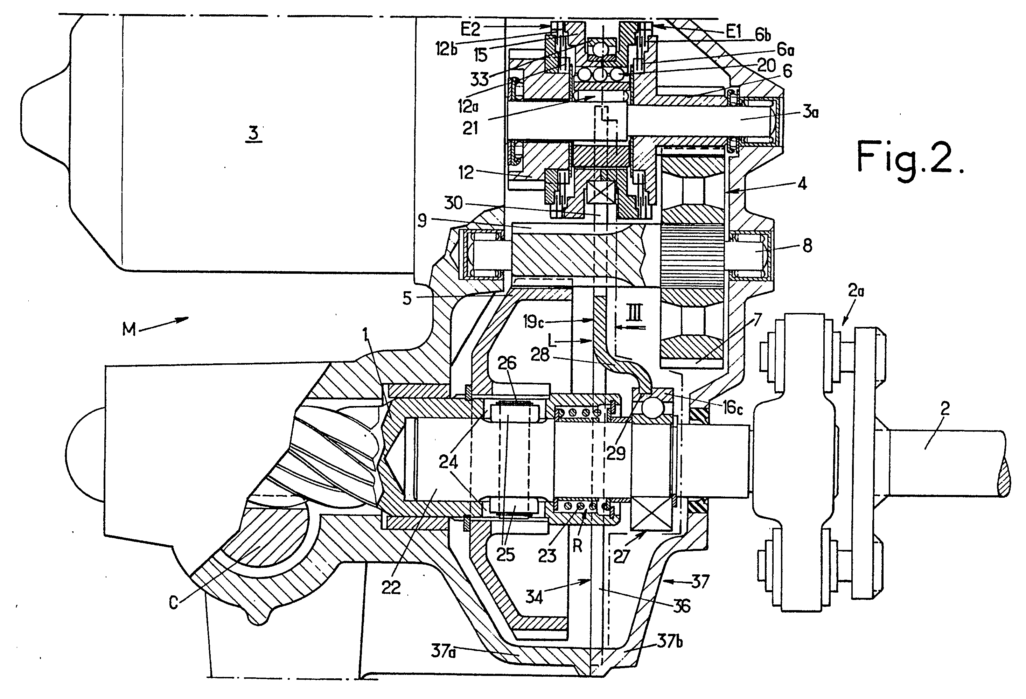

Les figures 2 et 3 illustrent une variante de réalisation dans laquelle les éléments semblables à ceux déjà décrits avec référence à la figure 1, ou jouant des rôles analogues, sont désignés par les mêmes références, éventuellement complétées par la lettre c, sans que leur description soit reprise en détail.

On peut voir, sur la figure 2, que la liaison en rotation du baladeur 15 et de l'arbre 3a, avec possibilité de coulissement axial, est assurée par des cannelures à billes 20 facilitant le coulissement. De plus, une roue libre 21 est disposée entre le baladeur 15 et l'arbre 3a. La disposition de cette roue libre 21 est telle qu'elle assure l'entraînement en rotation du baladeur 15 et donc de l'organe récepteur 1 par le moteur 3 et l'arbre 3a dans le sens où ce moteur 3 peut tourner. La roue libre 21 empêche l'entraînement en sens inverse du moteur 3 par le baladeur 15 (et donc par l'arbre de manœuvre 2) lorsque le moteur 3 ne fonctionne pas.

L'organe récepteur 1, dans la réalisation de la figure 2, est immobilisé axialement tout en restant libre en rotation. Un corps cylindrique 22, coaxial à l'organe 1 est monté coulissant suivant la direction axiale, dans un alésage borgne de l'organe 1 ; ce corps 22 peut coulisser de part ou d'autre d'une position de repos à l'encontre de moyens de rappel élastiques formés par un seul ressort à double effet 23, selon que le couple de manœuvre exercé sur l'arbre 2 est dirigé dans un sens ou dans l'autre. La poussée axiale du corps 22, en réponse à l'exercice d'un couple sur l'arbre 2, est obtenue par réaction, contre les bords inclinés de lumières 24 pratiquées dans l'organe rotatif 1, de galets 25 portés par un axe 26 engagé dans un alésage diamétral du corps cylindrique 22 ; l'axe 26 est solidaire en rotation et en translation du corps 22.

La pièce coulissante 16c est formée par la bague extérieure d'un roulement à billes 27 dont la bague intérieure est calée en translation et en rotation sur le corps 22. La pièce 16c est donc libre en rotation par rapport au corps 22 mais liée en translation à ce corps.

La plaque de liaison 19c comporte une partie intermédiaire recourbée 28 dont une bordure est engagée dans un embrèvement 29 de la pièce 16c, comme visible sur les figures 2 et 3. La portion de la plaque 19c située, par rapport à la portion médiane 28, du côté du moteur 3, se termine par une fourche 30 (fig. 3) à deux branches ; les bords intérieurs de chaque branche sont engagés avec un jeu minimal dans deux embrèvements 31, 32 prévus dans la bague extérieure d'un roulement 33 porté par le baladeur 15.

L'autre portion d'extrémité de la plaque 19c forme également une fourche 34 (fig. 3) à deux branches 35, 36, dont les extrémités sont immobilisées entre deux éléments 37a, 37b (fig. 2) du carter 37 contenant les moyens de réduction et les arbres du mécanisme. Les branches 35, 36, sont relativement minces et longues de manière à posséder une flexibilité suffisante pour permettre à la portion médiane 28 d'accompagner tout coulissement de la pièce 16c en s'inclinant légèrement, de telle sorte que la fourche 30, située à l'autre extrémité, transmette au baladeur 15 un mouvement de translation amplifié par rapport à celui de la pièce 16c.

Le fonctionnement du mécanisme d'assistance des figures 2 et 3 est semblable à celui de la figure 1.

L'exercice d'un couple sur l'arbre de manœuvre 2 entraîne un coulissement axial du corps 22 à l'encontre des moyens de rappel élastiques 23. La pièce 16c se déplace avec le corps 22. Ce mouvement de translation est amplifié par la plaque de liaison 19c et transmis au baladeur 15. L'embrayage E1 ou E2, associé au sens de déplacement, est mis en action si ce déplacement est suffisant. L'assistance de la rotation de l'organe 1 est alors assurée par le moteur.

Les embrayages E1, E2 des fig. 1 et 2, et la roue libre 21 de la fig. 2 peuvent être de dimensions réduites. En effet, ils n'ont qu'un faible couple à transmettre puisqu'ils sont disposés sur un arbre tournant plus vite que l'organe rotatif 1 et donc soumis à un couple inférieur. Dans les modes de réalisation décrits, les embrayages E1, E2 et la roue libre 21 sont prévus directement sur l'arbre 3a, c'est-à-dire à l'entrée des moyens de réduction, donc sur l'arbre le plus rapide. Le rapport du couple sur l'organe rotatif 1 au couple supporté par les embrayages E1, E2 et la roue libre 21 est donc égal au rapport de démultiplication des moyens de réduction (vitesse d'entrée/vitesse de sortie).

Pour assurer l'accouplement par friction, il suffira d'exercer une poussée axiale relativement faible sur le baladeur 15 ; la plaque mobile 19, 19c qui exerce cette poussée n'est donc soumise qu'à des efforts peu importants ; elle peut être de construction légère et n'introduit qu'une résistance négligeable à la rotation de l'organe 1 par poussée axiale de la pièce 16 contre les anneaux d'appui 16a, 16b ou par poussée axiale de la pièce 16c formée par la bague extérieure d'un roulement.

Il est clair que l'invention s'applique également au cas où le moteur 3 est prévu pour tourner dans les deux sens et où un seul embrayage est utilisé avec un seul train de réduction, sans engrenages pour inverser le sens de rotation.

Des variantes de réalisation peuvent être envisagées. Notamment, les liaisons de la plaque mobile 19, 19c avec le baladeur 15, la pièce 16 ou 16c et le boîtier 37 pourraient former des articulations. Dans le cas d'une telle liaison articulée avec le boîtier 37, les branches 35, 36 de la fourche 34 (fig. 3) pourraient être rigides, la plaque 19c constituant alors un levier articulé.

**Revendications**

1. Mécanisme d'assistance rotative propre à être accouplé à un organe récepteur (1) susceptible de tourner alternativement dans les deux sens, en réponse à la rotation d'un arbre de manœuvre (2), notamment pour direction de véhicule, comprenant un moteur (3), des moyens de réduction (4) de la vitesse du moteur et au moins un embrayage (E1, E2) actionné par des moyens de commande comportant une pièce (16, 16c) coaxiale à l'organe récepteur, coulissant à l'encontre de moyens de rappel élastiques (17, 18) en fonction de l'amplitude et du sens du couple de manœuvre, caractérisé par le fait que le ou chaque embrayage (E1, E2) est monté sur un arbre (3a) des moyens de réduction (4) qui tourne plus vite que l'organe récepteur (1), et que les moyens de commande comprennent des moyens de liaison (L) entre la susdite pièce coulissante (16, 16c) et le ou lesdits embrayages (E1, E2).

2. Mécanisme d'assistance selon la revendication 1, caractérisé par le fait que les moyens de liaison (L) sont formés par une plaque (19, 19c) mobile coopérant avec la pièce coulissante (16, 16c).

3. Mécanisme d'assistance selon la revendication 2, caractérisé par le fait que la plaque mobile (19) est rigidement solidaire de la pièce coulissante (16), cette pièce étant montée libre en rotation sur l'organe récepteur (1) ou sur l'arbre de manœuvre (2) coaxial à cet organe récepteur.

4. Mécanisme d'assistance selon la revendication 1 ou 2, caractérisé par le fait que la plaque mobile (19c) constitue un levier dont une partie intermédiaire (28) coopère avec la pièce coulissante (16c) et dont les parties extrêmes sont reliées, respectivement, à un carter (37) contenant les moyens de réduction (4) de la vitesse du moteur, et à un élément mobile (15) du ou de chaque embrayage.

5. Mécanisme d'assistance selon la revendication 4, caractérisé par le fait que la portion de la plaque (19c) reliée au carter forme une fourche (34) à deux branches (35, 36) dont les extrémités sont immobilisées entre deux éléments (37a, 37b) du carter, ces branches étant relativement minces et longues de manière à posséder une flexibilité suffisante pour permettre à la portion médiane (28) d'accompagner tout coulissement de la pièce (16c).

6. Mécanisme d'assistance selon l'une quelconque des revendications précédentes, caractérisé par le fait que le ou chaque embrayage (E1, E2) est disposé directement sur l'arbre de sortie du moteur.

7. Mécanisme d'assistance selon l'une quelconque des revendications précédentes, dans lequel le moteur (3) est prévu pour tourner dans un seul sens, les moyens de réduction de la vitesse comprenant un train d'engrenages réducteur (4) et des moyens inverseurs du sens de rotation, caractérisé par le fait qu'un premier embrayage (E1) relie le moteur (3) directement au train d'engrenages réducteur (4), tandis qu'un second embrayage (E2) relie le moteur au train d'engrenages réducteur par l'intermédiaire des moyens inverseurs (10), les deux embrayages étant coaxiaux à l'arbre de sortie du moteur (3a) et engagés alternativement par mise en action des moyens de commande.

8. Mécanisme d'assistance selon la revendication 7, caractérisé par le fait que les deux embrayages (E1, E2) comprennent des anneaux de friction solidaires en rotation d'un baladeur (15) monté libre en coulissement sur l'arbre (3a) et lié en rotation à cet arbre.

9. Mécanisme d'assistance selon la revendication 8, caractérisé par le fait qu'une roue libre (21) est disposée entre le baladeur (15) et l'arbre (3a), la disposition de cette roue libre étant telle qu'elle assure l'entraînement en rotation du baladeur dans le sens où le moteur peut tourner.

**Claims**

1. Rotary assistance mechanism designed to be coupled to a driven part (1) capable of rotating alternately in both senses in response to the rotation of an operating shaft (2), in particular for steering a vehicle, comprising a motor (3), motor speed reduction means (4) and at least one clutch (E1, E2) actuated by control means comprising a member (16, 16c) coaxial with the driven part and sliding in contact with elastic return means (17, 18) according to the amplitude and sense of direction of the operating couple, characterised by the fact that the or each clutch (E1, E2) is mounted on a shaft (3a) of the reduction means (4), which shaft rotates at a higher speed than the driven part (1), and that the control means comprise connecting means (L) between said sliding member (16, 16c) and the said clutch or clutches (E1, E2).

2. Assistance mechanism according to claim 1, characterised by the fact that the connecting means (L) are formed by a movable plate (19, 19c) cooperating with the sliding member (16, 16c).

3. Assistance mechanism according to claim 2, characterised by the fact that the movable plate (19) is rigidly integral with the sliding member (16), which sliding member is mounted to be freely rotatable on the driven part (1) or on the operating shaft (2) coaxial with said driven part.

4. Assistance mechanism according to claim 1 or claim 2, characterised by the fact that the movable plate (19c) constitutes a lever having an intermediate part (28) which cooperates with the sliding member (16c) and end parts which are connected, respectively, to a housing (37) containing the motor speed reduction means (4) and to a movable element (15) of the or each clutch.

5. Assistance mechanism according to claim 4, characterised by the fact that the portion of plate (19c) connected to the housing forms a fork (34) with two prongs (35, 36), the ends of which prongs are immobilized between two elements (37a, 37b) of the housing, said prongs being relatively thin and long so as to have sufficient flexibility to enable the intermediate portion (28) to accompany every sliding movement of the member (16c).

6. Assistance mechanism according to any one of the preceding claims, characterised by the fact that the or each clutch (E1, E2) is arranged directly on the output shaft of the motor.

7. Assistance mechanism according to any one of the preceding claims, in which the motor (3) is provided to rotate in one sense only, the speed reduction means comprising a reduction gear train (4) and sense of rotation reversing means, characterised by the fact that a first clutch (E1) connects the motor (3) directly to the reduction gear train (4) while a second clutch (E2) connects the motor to the reduction gear train by way of reversing means (10), the two clutches being coaxial with the motor output shaft (3a) and brought into engagement alternatively by operation of the control means.

8. Assistance mechanism according to claim 7, characterised by the fact that the two clutches (E1, E2) comprise friction rings fixed in their rotation to a sliding collar (15) which is mounted to be freely slidable on the shaft (3a) and connected in its rotation to said shaft.

9. Assistance mechanism according to claim 8, characterised by the fact that a free wheel (21) is arranged between the sliding collar (15) and the shaft (3a), this free wheel being so arranged as to ensure that the sliding collar will be driven in rotation in the sense in which the motor may turn.


**Ansprüche**

1. Rotationsservomechanismus zur Kupplung mit einem Aufnehmerorgan (1), das in Abhängigkeit von der Drehbewegung einer Bedienungswelle (2) alternativ in beiden Richtungen drehbar ist, insbesondere Servolenkung für Fahrzeuge, mit einem Motor (3), mit einer diesem Motor (3) zugeordneten Untersetzungseinrichtung (4) sowie mit wenigstens einer ausrückbaren Kupplung (E1, E2), die durch eine Steuereinrichtung betätigbar ist, welche ein koaxial zu dem Aufnehmerorgan (1) angeordnetes gleitbares Bauteil (16, 16c) umfaßt, das gegen die Wirkung elektrischer Rückstellmittel (17, 18) eine von der Größe und der Richtung des Momentes der Bedienungswelle (2) abhängigige Gleitbewegung ausführt, dadurch gekennzeichnet, daß die oder jede Kupplung (E1, E2) auf einer Welle (3a) der Untersetzungseinrichtung (4) montiert ist, die sich schneller dreht als das Aufnehmerorgan (1) und daß die Steuereinrichtung zwischen dem gleitbaren Bauteil (16, 16c) und der oder jeder Kupplung (E1, E2) angeordnete Verbindungsmittel (L) umfaßt.

2. Servomechanismus nach Anspruch 1, dadurch gekennzeichnet, daß die Verbindungsmittel (L) von einer mit dem gleitbaren Bauteil (16, 16c) zusammenwirkenden beweglichen Platte (19, 19c) gebildet sind.

3. Servomechanismus nach Anspruch 2, dadurch gekennzeichnet, daß die bewegliche Platte (19) mit dem gleitbaren Bauteil (16) fest verbunden ist und daß das gleitbare Bauteil (16) freilaufend auf dem Aufnehmerorgan (1) oder auf der zu diesem Aufnehmerorgan (1) koaxialen Bedienungswelle (2) montiert ist.

4. Servomechanismus nach Anspruch 1 oder 2, dadurch gekennzeichnet, daß die bewegliche Platte (19c) einen Hebel bildet, der ein mit dem gleitbaren Bauteil (16c) zusammenwirkendes Mittelteil (28) aufweist und dessen Endbereiche mit einem die Untersetzungseinrichtung (4) zur Untersetzung der Motorgeschwindigkeit enthaltenden Gehäuse (37) bzw. mit einem beweglichen Element (15) der oder jeder Kupplung verbunden sind.

5. Servomechanismus nach Anspruch 4, dadurch gekennzeichnet, daß der mit dem Gehäuse verbundene Bereich der Platte (19c) eine Gabel (34) mit zwei Armen (35, 36) bildet, deren Enden zwischen zwei Elementen (37a, 37b) des Gehäuses festgehalten sind, und daß die beiden Arme relativ dünn und lang sind, so daß das Mittelteil (28) aufgrund der Flexibilität der Arme jeder Gleitbewegung des genannten Bauteiles (16c) folgen kann.

6. Servomechanismus nach einem der vorhergehenden Ansprüche, dadurch gekennzeichnet, daß die oder jede Kupplung (1E, 1C) unmittelbar auf der Ausgangswelle des Motors angeordnet ist.

7. Servomechanismus nach einem der vorhergehenden Ansprüche, bei welchem der Motor (3) nur in einer Richtung drehbar ist und die Untersetzungseinrichtung ein untersetzendes Zahnradvorgelege (4) sowie Mittel zur Drehrichtungsumkehr beinhaltet, dadurch gekennzeichnet, daß eine erste Kupplung (E1) den Motor (3) direkt mit dem untersetzenden Zahnradvorgelege (4) verbindet, während eine zweite Kupplung (E2) den Motor über die Mittel zur Drehrichtungsumkehr (10) mit dem untersetzenden Zahnradvorgelege (4) verbindet, und daß die beiden Kupplungen koaxial zur Ausgangswelle (3a) des Motors (3) angeordnet und durch die Wirkung der Steuereinrichtung alternativ einrückbar sind.

8. Servomechanismus nach Anspruch 7, dadurch gekennzeichnet, daß die beiden Kupplungen (E1, E2) Ringe aus Reibungsmaterial umfassen, die drehfest mit einem Schieberad (15) verbunden sind, das frei gleitbar auf der Ausgangswelle (3a) montiert und drehfest mit dieser (3a) verbunden ist.

9. Servomechanismus nach Anspruch 8, dadurch gekennzeichnet, daß zwischen dem Schieberad (15) und der Ausgangswelle (3a) des Motors (3) ein Freilauf vorgesehen ist und daß dieser Freilauf derart angeordnet ist, daß das Schieberad (15) in der Drehrichtung mitgenommen wird, in der der Motor sich drehen kann.

# Fig.1.

1

Fig.2.

Fig.3.